# EUROPÄISCHE PATENTSCHRIFT

(11) **EP 3 383 656 B1**
(45) Veröffentlichungstag und Bekanntmachung des Hinweises auf die Patenterteilung: **25.03.2020**
(21) Anmeldenummer: 16801822.4
(22) Anmeldetag: 29.11.2016
(51) Int. Cl.: B29C 64/00, B29C 70/74, B29C 70/76, B33Y 10/00, B33Y 80/00

(54) **VERFAHREN UND VERWENDUNG EINES 3D-DRUCKERS ZUR HERSTELLUNG EINES KFZ-INNENAUSSTATTUNGSBAUTEILS SOWIE DADURCH HERGESTELLTES KFZ-INNENAUSSTATTUNGSBAUTEIL**
METHOD AND USE OF A 3D PRINTER FOR PRODUCING A MOTOR VEHICLE INTERIOR TRIM COMPONENT, AND A MOTOR VEHICLE INTERIOR TRIM COMPONENT PRODUCED THEREBY
PROCÉDÉ ET UTILISATION D'UNE IMPRIMANTE TRIDIMENSIONNELLE POUR FABRIQUER UN ÉLÉMENT D'ÉQUIPEMENT INTÉRIEUR DE VÉHICULE AUTOMOBILE ET ÉLÉMENT D'ÉQUIPEMENT INTÉRIEUR DE VÉHICULE AUTOMOBILE FABRIQUÉ PAR CE PROCÉDÉ

(30) Priorität: 30.11.2015 AT 510222015
(43) Veröffentlichungstag der Anmeldung: 10.10.2018
(73) Patentinhaber: Greiner Perfoam GmbH, 4550 Kremsmünster (AT)
(72) Erfinder: DRAXLER, Markus, 4040 Linz (AT); LIDAUER, Christian, 4614 Marchtrenk (AT)
(74) Vertreter: Burger, Hannes
(86) Internationale Anmeldenummer: PCT/EP2016/079151
(87) Internationale Veröffentlichungsnummer: WO 2017/093261

(56) Entgegenhaltungen:
- WO-A1-2014/193961
- AT-A1- 509 944
- DE-A1-102013 217 825
- FR-A- 1 104 477

## Beschreibung

Die Erfindung betrifft ein Verfahren zur Herstellung eines Kfz-Innenausstattungsbauteils aus einem Grundkörper, der zumindest teilweise aus einem polymeren Werkstoff hergestellt wird, und der von Seitenkanten entlang seines Umfangs begrenzt ist, wobei zumindest eine Seitenkanten zumindest teilweise, bevorzugt sämtliche Seitenkanten entlang des gesamten Umfangs des Grundkörpers, mit einem Abdeckelement auf Kunststoffbasis versehen werden.

Weiter betrifft die Erfindung ein Kfz-Innenausstattungsbauteil mit einem Grundkörper, der zumindest teilweise aus einem polymeren Werkstoff besteht, und der von Seitenkanten entlang seines Umfangs begrenzt ist, wobei an zumindest einer Seitenkanten zumindest teilweise, bevorzugt an sämtliche Seitenkanten entlang des gesamten Umfangs des Grundkörpers, ein Abdeckelement auf Kunststoffbasis angeordnet ist.

Zudem betrifft die Erfindung die Verwendung eines 3D-Druckers.

Kfz-Innenausstattungsbauteile, wie beispielsweise Hutablagen, Ladeböden, Seitenverkleidungen, Türverkleidungen, etc., werden heute teilweise als Sandwichbauteile mit einem Kemelement, das beidseits von zumindest einer Deckschicht abgedeckt ist, hergestellt, um damit den Anforderungen der Automobilindustrie hinsichtlich Gewichtsreduktion gerecht zu werden. Das Kernelement kann dazu als Leichtbauteil ausgeführt sein, beispielsweise als Wabenplatte.

Derartige Bauteile für Kraftfahrzeuge werden heute teils durch Verpressen des Schichtaufbaus in einer entsprechenden Form für die Konturgebung hergestellt. Dazu wird das vorerst ebenflächige Ausgangsmaterial des Schichtaufbaus normalerweise übereinander gelegt und in der Folge in eine Presse eingelegt, wobei in der Presse auch gleichzeitig die Verbindung der einzelnen Lagen erfolgt, beispielsweise durch die Ausübung von Druck und Temperatur.

Herstellungsbedingt werden die Halbfabrikate in einer Übergröße in die Presse eingelegt, sodass die endgültige Formgebung nach dem Verpressen erfolgt. Dies kann beispielsweise mit einer so genannten Pinch oder Tauch-Kante mit einem abscherenden Werkzeug erfolgen, wozu der verpresste Bauteil in ein Schneidwerkzeug eingelegt wird oder die Pressform dieses Schneidewerkzeug bereits umfasst. Der Vorteil dieses Verfahrens liegt darin, dass das Bauteil in einem Schritt herstellbar ist. Nachteilig dabei ist allerdings, dass die Schnittkanten ein unsauberes Erscheinungsbild aufweisen. Weiter kann die Oberware an den Beschnittkanten ausfransen. Ein weiterer Nachteil ist darin zu sehen, dass die Werkzeuge üblicherweise eine kurze Standzeit aufweisen, da mit zunehmender Verwendungsdauer die Beschnittqualität schlechter wird.

Um diesen Problemen zu begegnen wurden im Stand der Technik bereits unterschiedlichste Verfahren vorgeschlagen, die Beschnittkanten einzufassen.

So beschreibt beispielsweise die AT 509 944 A1 ein Verfahren zur Herstellung eines Bauteils für ein Kraftfahrzeug nach dem ein mehrschichtiger Grundkörper hergestellt und unter Ausbildung einer Beschnittkante zumindest teilweise im Randbereich beschnitten wird, wobei die Beschnittkante in einer Form mit einem Formhohlraum mit zumindest einem Kunststoff zur Ausbildung eines Randelementes umspritzt oder mit einem Kunststoff umschäumt wird.

Aus der DE 10 2009 046 811 A1 ist ein Verfahren zur Herstellung einer Kraftfahrzeughutablage bekannt, bei dem nach dem Ausstanzen der Hutablage aus einem Verbundmaterial eine Leiste an der hinteren Kante der Hutablage befestigt wird. WO2014/193961 offenbart die Merkmale der Oberbegriffe der Ansprüche 1 und 10.

Nachteilig bei den bekannten Verfahren ist, dass diese relativ unflexibel in Hinblick auf Klein- und Kleinstserien von Kfz-Innenausstattungsbauteilen sind, wenn die Einfassung der Beschnittkanten in situ hergestellt werden soll.

Die Aufgabe der vorliegenden Erfindung ist es, eine Möglichkeit zu schaffen, mit der Kfz-Innenausstattungsbauteile mit einem Serienherstellungsverfahren in Kleinstserien bzw. als Einzelanfertigung hergestellt werden können.

Die Aufgabe der Erfindung wird mit den eingangs genannten Verfahren gelöst, nach dem das Abdeckelement mittels eines 3D-Druckverfahrens hergestellt wird.

Weiter wird die Aufgabe der Erfindung durch das eingangs genannte Kfz-Innenausstattungsbauteil gelöst, bei dem das Abdeckelement mittels 3D-Druck hergestellt ist.

Zudem wird die Aufgabe der Erfindung durch die eingangs genannte Verwendung eines 3D-Druckers gelöst, nach der vorgesehen ist, dass ein Abdeckelement auf Kunststoffbasis entlang von zumindest einer Seitenkante eines, zumindest teilweise aus einem polymeren Werkstoff hergestellten Grundkörpers eines Kfz-Innenausstattungsbauteils hergestellt wird.

Von Vorteil ist dabei, dass das Abdeckelement frei hinsichtlich Form und Farbe sowie hinsichtlich der verwendeten Kunststoffbasis hergestellt werden kann. Darüber hinaus ist die Ausbildung von sehr schmalen Abdeckelementen problemlos möglich, die mit anderen Verfahren nur mit sehr hohem Aufwand herstellbar sind. Das Abdeckelement zur Kantenabdeckung kann in einem Schritt hergestellt und auf den Rohling für das Kfz-Innenausstattungsbauteil aufgebracht und gegebenenfalls mit diesem verbunden werden. Es ist damit eine entsprechende Kostenreduktion realisierbar. Eine weitere Kostenreduktion wird durch den Entfall bzw. die Reduktion von Entwicklungskosten und den Entfall von Werkzeugkosten für Spritzgusswerkzeuge, Extrusionswerkzeuge, Schäumwerkzeuge, etc., Transportkosten, erreichbar. Obwohl dieses Verfahren also sehr gut für Einzelanfertigungen einsetzbar ist, kann es trotzdem auch in der (Groß-)Serienfertigung angewandt werden, sodass also die bedarfsorientierte Produktion vereinfacht werden kann. Darüber hinaus kann damit die Beschaffung der Kfz-Innenausstattungsbauteile durch den Kunden vereinfacht werden, indem er die Daten für die Herstellung des Abdeckelementes, d.h. seine spezifische gewünschte Form und dessen Farbe sowie die Situierung auf dem Kfz-Innenausstattungsbauteil, etc., in das System des Herstellers des Kfz-Innenausstattungsbauteil einspielt. Zusammen mit Daten der Kapazitätsauslastung beim Hersteller kann damit auch der Lieferzeitpunkt bestimmt oder gegebenenfalls sogar vom Kunden vorgegeben werden. Durch das Einspielen der Kundendaten kann damit das Kfz-Innenausstattungsbauteil gegebenenfalls auch völlig automatisch ohne weitere Eingriffe durch den Hersteller gestartet werden, sodass letztere nur noch die Bereitstellung der Rohstoffe in ausreichendem Ausmaß sicherstellen muss.

Das Abdeckelement kann im einfachsten Fall als einfache Randleiste ausgeführt sein, insbesondere wenn die Haftfestigkeit des Abdeckelementes auf dem Grundkörper durch eine entsprechend gute Werkstoffkompatibilität ausreichend ist bzw. wenn eine mechanische Verankerung vorgesehen ist.

Es ist aber auch möglich, dass das Abdeckelement den Grundkörper beidseits umgreifend hergestellt wird, wodurch Haftfestigkeitsschwierigkeiten besser entgegen getreten werden kann, da damit zwischen dem Grundkörper und dem Abdeckelement ein Formschluss ausgebildet werden kann.

Nach einer Ausführungsvariante des Verfahrens kann vorgesehen werden, dass der Grundkörper zumindest im Bereich der mit dem Abdeckelement zu versehenden Seitenkante(n) vor der Herstellung des Abdeckelementes erwärmt wird. Es kann damit die Haftung des Abdeckelementes am Grundkörper verbessert werden. Weiter kann damit besser vermieden werden, dass der Werkstoff für das Abdeckelement nach dessen Applikation auf dem Grundkörper zu rasch abkühlt und dadurch Störstellen im Abdeckelement entstehen.

Weiter kann vorgesehen werden, dass am Beginn der Herstellung des Abdeckelementes auf dem Grundkörper mit einer ersten Temperatur und am Ende mit einer zweiten Temperatur erfolgt, wobei die erste Temperatur höher ist als die zweite Temperatur. Durch diese Ausführungsvariante kann erreicht werden, dass zu Beginn des Aufbaus des Abdeckelementes das Kunststoffbasismaterial für das Abdeckelement besser fließt, wodurch die Nachbildung der Kontur des Grundkörpers im Bereich, in dem das Abdeckelement angeordnet werden soll, einfacher und mit höherer Genauigkeit erfolgen kann. Durch das dazu relativ kühlere Aufbringen des Kunststoffbasismaterials am Ende des 3D-Drucks kann wiederum der ortsgenaue Druck verbessert werden, sodass also die Konturen nicht "verschwimmen" sondern die Formgebung für das Abdeckelement mit einer höheren Präzision erfolgen kann. Durch die verringerte Fließbewegung des Kunststoffbasismaterials am Ende des Auftrags des Abdeckelementes kann zudem die Programmierung des Abdeckelementes vereinfacht werden, da Einflussfaktoren auf die formgetreue Abscheidung des Abdeckelementes reduziert werden können.

Nach einer Ausführungsvariante dazu kann vorgesehen sein, dass das Herstellen des Abdeckelementes auf den Grundkörper unter Anwendung eines Temperaturgradienten zwischen der ersten Temperatur und der zweiten Temperatur erfolgt, wodurch eine langsamere Absenkung der Temperatur über die Zeit erreicht werden kann. Es können damit Fehler im Aufbau des Abdeckelementes, die gegebenenfalls durch zu hohe Temperaturunterschiede während der Abscheidung entstehen können, besser vermieden werden.

Es ist weiter möglich, dass in zumindest einer, die Seitenkante des Kfz-Innenausstattungsbauteils 1 bildende Stirnfläche eine hinterschnittene Nut ausgebildet wird. Auch mit dieser Ausführungsvariante kann die Haftung des Abdeckelementes am Grundkörper verbessert werden, da sich durch die Hinterschneidung zusätzlich ein Formschluss ausbilden lässt. Dabei ist wiederum die voranstehende Ausführungsvariante von Vorteil, wonach am Anfang der Ausbildung der Aufbau des Abdeckelementes mit einer relativ höheren Temperatur stattfinden kann, da durch das verbesserte Fließen des Kunststoffbasismaterials für das Abdeckelement die Hinterschneidung einfacher und mit höherer Sicherheit mit dem Kunststoffbasismaterial ausgefüllt werden kann.

Es ist auch möglich, dass aus einem zweiten Werkstoff in dem Abdeckelement zumindest ein Verstärkungselement mittels 3D-Druck ausgebildet wird. Auch bei dieser Ausführungsvariante zeigt sich wiederum die Stärke des Verfahrens, da durch die Flexibilität hinsichtlich der Form und der Position derartige Verstärkungselemente einfach und an die Bedürfnisse besser angepasst in das Abdeckelement eingebaut werden können. Es sind dabei auch nichtlineare Ausführungen von derartigen Verstärkungselementen einfacher realisierbar.

Andererseits ist es mit dem Verfahren aber auch relativ einfach möglich, das Abdeckelement mit einem Härtegradienten herzustellen. Es ist damit eine Ausführung des Abdeckelementes einfacher darstellbar, bei der der an den Grundkörper anschließende Bereich des Abdeckelementes härter und der äußere Endbereich des Abdeckeckelementes dazu relativ weicher ist. Durch diese Ausgestaltung des Abdeckelementes kann einerseits das "Klappern" des Kfz-Innenausstattungsbauteils während der Fahrt besser vermieden werden. Andererseits kann damit aber auch die Anlage des Kfz-Innenausstattungsbauteils an ein weiteres Bauteil verbessert werden, da die Konturen des weiteren Bauteils durch das im Anlagebereich weichere Abdeckelement von diesem besser abgebildet werden können.

Zum besseren Verständnis der Erfindung wird diese anhand der nachfolgenden Figuren näher erläutert.

Es zeigen jeweils in vereinfachter, schematischer Darstellung:
- Fig. 1: ein Kfz-Innenausstattungsbauteil in Schrägansicht;
- Fig. 2: einen Ausschnitt einer erste Ausführungsvariante der Anordnung eines Abdeckelementes an einem Grundkörper des Kfz-Innenausstattungsbauteils im Querschnitt;
- Fig. 3: einen Ausschnitt einer anderen Ausführungsvariante der Anordnung eines Abdeckelementes an einem Grundkörper des Kfz-Innenausstattungsbauteils im Querschnitt;
- Fig. 4: einen Ausschnitt einer weiteren Ausführungsvariante der Anordnung eines Abdeckelementes an einem Grundkörper des Kfz-Innenausstattungsbauteils im Querschnitt;
- Fig. 5: eine Druckvorrichtung zur Herstellung des Abdeckelementes auf dem Grundkörper des Kfz-Innenausstattungsbauteils;
- Fig. 6: einen Ausschnitt aus einer Produktionslinie zur Herstellung eines Kfz-Innenausstattungsbauteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

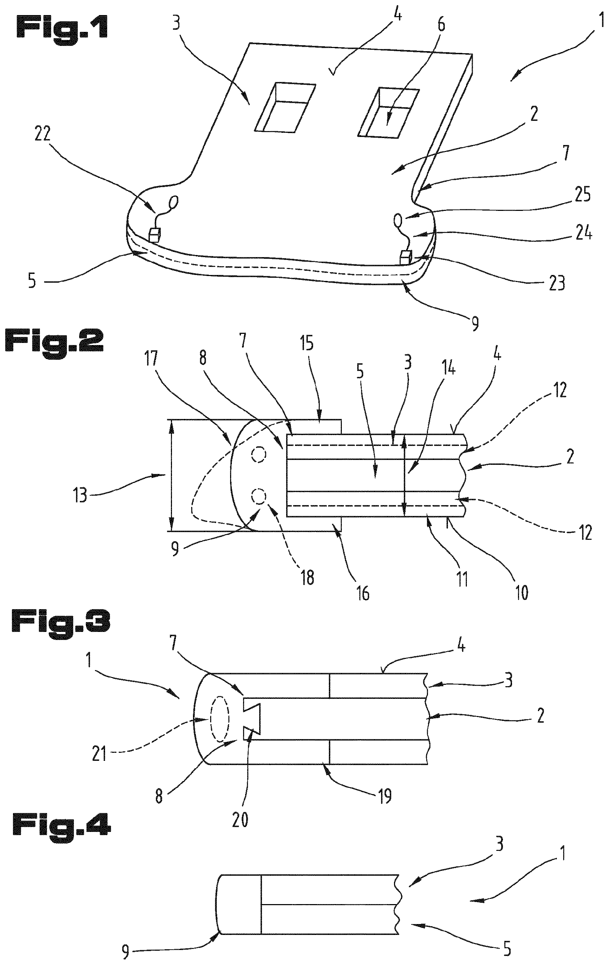

Fig. 1 zeigt ein Kfz-Innenausstattungsbauteil 1 in Form einer Gepäckraumabdeckung für ein Kraftfahrzeug, teilweise auch als Hutablage bezeichnet, in Schrägansicht. Die Hutablage ist insbesondere freitragend ausgeführt.

Es sei bereits an dieser Stelle ausgeführt, dass das Kfz-Innenausstattungsbauteil 1 auch für einen anderen Verwendungszweck in Kraftfahrzeugen ausgebildet sein kann. Beispielsweise kann das Kfz-Innenausstattungsbauteil 1 als (Seiten)Verkleidung für eine Kraftfahrzeugtür oder einen Kofferraum, eine Säule, beispielsweise die A-, B- oder C-Säule eines Kraftfahrzeuges, als Ladeboden an sich, etc., ausgebildet sein. Zudem kann das Kfz-Innenausstattungsbauteil 1 auch ein Akustikbauteil für ein Kraftfahrzeug sein, mit dem beispielsweise der Lärmpegel im Fahrgastraum reduziert werden kann oder mit dem eine ganz bestimmte, beabsichtigte Geräuschkulisse im Fahrgastraum des Kfz erzeugt wird. Darüber hinaus kann das Kfz-Innenausstattungsbauteil 1 auch im Motorraum eines Kfz eingesetzt werden, z.B. für die Reduktion des Lärmpegels.

Das Kfz-Innenausstattungsbauteil 1 umfasst einen Grundkörper 2, der zumindest eine Dekorschicht 3 auf einer Oberseite 4, die im geschlossenen Zustand des Kfz-Innenausstattungsbauteils 1 (nach oben) in den Fahrgastraum weist, sowie eine unterhalb dieser Dekorschicht 4 angeordnete und bevorzugt mit dieser verbundene Kernschicht 5 aufweist. Gegebenenfalls kann zwischen der Dekorschicht 3 und der Kernschicht 5 zumindest eine weitere Schicht angeordnet sein, ebenso kann auf der Unterseite des Kfz-Innenausstattungsbauteils 1 eine weitere Dekorschicht bei Bedarf angeordnet werden. Derartige Ausgestaltungen von Gepäckraumabdeckungen, wie sie üblicherweise für Kombinationskraftfahrzeuge verwendet werden, bei denen der Kofferraum, das heißt der Gepäckraum, nur über dieses Kfz-Innenausstattungsbauteil 1 vom Fahrgastraum abgegrenzt ist, sind bereits aus dem Stand der Technik bekannt.

Der Grundkörper 2 wird vollständig oder zumindest teilweise aus einem polymeren Werkstoff hergestellt. Vorzugsweise weist der Grundkörper 2 zumindest eine Schicht auf, insbesondere die Kernschicht 5, die zumindest teilweise aus einem thermoplastischen und/oder duroplastischen Kunststoff besteht.

Im Rahmen der Erfindung sind beispielsweise Kernschichten 2 einsetzbar, die folgenden Aufbau aufweisen:
- erste Deckschicht, Schaumstoffschicht, zweite Deckschicht,
- erste Deckschicht, Wabenschicht, zweite Deckschicht
- nur Deckschicht.

Die erste und/oder die zweite Deckschicht bestehen vorzugsweise aus einem thermoplastischen und/oder duroplastischen Kunststoff. In diesem können gegebenenfalls die nachstehend genannten Verstärkungsfasern eingelagert sein.

Das Kfz-Innenausstattungsbauteil 1 kann einteilig ausgebildet sein, wie dies in Fig. 1 dargestellt ist. Ebenso besteht die Möglichkeit, dass dieses mehrteilig aus insbesondere über ein Filmscharnier miteinander verbundenen Teilen besteht, sodass das Kfz-Innenausstattungsbauteil 1 zusammenlegbar bzw. zusammenfaltbar ist. Auch derartige Ausgestaltungen sind aus dem Stand der Technik bekannt.

Wie Fig. 1 zeigt, kann an der Oberseite 4 des Kfz-Innenausstattungsbauteils 1 zumindest eine Vertiefung 6 angeordnet bzw. ausgebildet sein.

Die Dekorschicht 3 kann beispielsweise durch einen Teppich, ein Vlies, einen Filz oder dergleichen sein. Die Kernschicht 5 kann durch einen Schaumstoff gebildet sein, beispielsweise einem Polyurethanschaum, wobei dieser Schaumstoff ein so genannter Neuschaum sein kann oder ein Verbundschaum, bei dem Schaumstoffpartikel aus Abfällen und Resten mit Neuschaum miteinander verbunden werden. Ebenso besteht die Möglichkeit, dass die Kernschicht 5 durch eine Wabenplatte, z.B. aus Karton oder Papier oder einem Kunststoff, insbesondere Polypropylen, zumindest teilweise gebildet ist bzw. kann diese Kernschicht 5 auch durch eine Kunststoffschicht, insbesondere eine mit Fasern verstärkte, thermoplastische Kunststoffschicht, gebildet sein. Als Fasern können sowohl anorganische, beispielsweise Glasfasern, Kohlenstofffasern, als auch organische Fasern, beispielsweise Polyesterfasern, Naturfasern, etc. verwendet werden.

Derartige Kfz-Innenausstattungsbauteile 1 werden üblicherweise durch aufeinander legen der einzelnen Schichten und einlegen dieses Schichtmaterials in eine Pressform mit anschließendem Verpressen hergestellt, wobei das Schichtmaterial normalerweise größer ausgebildet ist als das endgültige Kfz-Innenausstattungsbauteil 1, sodass es notwendig ist, dass im Bereich zumindest einer der Seitenkanten 7 ein Beschnitt unter Ausbildung zumindest einer Beschnittkante 8 (Fig. 2) durchgeführt wird. Der Grundkörper 2 kann an mehreren oder allen Seitenkante 7 eine derartige Beschnittkante 8 aufweisen.

Im Bereich dieser Beschnittkante 8 tritt der Schichtaufbau zutage, sodass also die Kernschicht 5 zu sehen ist. Zur Abdeckung der Beschnittkante 8 ist vorgesehen, dass an dieser zumindest teilweise ein Abdeckelement 9 ausgebildet bzw. angeordnet wird. Das Abdeckelement 9 dient einerseits dazu, den offenliegenden Schichtaufbau an den Stirnseiten des Grundkörpers abzudecken bzw. auch zur Vermeidung von Verletzungen, da die Seitenkanten 7 des Grundkörpers 2 u.U. scharfkantig sind bzw. an diesen u.U. Fasern, beispielsweise Glasfasern, aus der Kernschicht 5 austreten, falls letzte aus einem faserverstärktem Kunststoff gebildet ist.

Das Abdeckelement 9 erstreckt sich in Richtung des Umfangs des Kfz-Innenausstattungsbauteils 1 über zumindest einen Teil zumindest einer der Seitenkanten 7. Vorzugsweise erstreckt sich das Abdeckelement zur Gänze entlang sämtlicher Seitenkanten 7, an denen der Schichtaufbau des Grundkörpers 2 durch dessen Bearbeitung frei gelegt worden ist, insbesondere durchgehend entlang des gesamten Umfangs des Grundkörpers 2.

Das Abdeckelement 9 wird mittels 3D-Druck aus zumindest einem, gegebenenfalls geschmolzenen, Kunststoff hergestellt, wie dies nachstehend noch näher erläutert wird.

In Fig. 2 ist eine Ausführungsvariante des im Bereich der Beschnittkante 8 und insbesondere mit dem Grundkörper 2 verbundenen Abdeckelementes 9 des Kfz-Innenausstattungsbauteils 1 dargestellt. Der Grundkörper 2 besteht bei dieser Ausführungsvariante aus der ersten, oberen Dekorschicht 3, der Kernschicht 5 und einer weiteren, an einer Unterseite 10 angeordneten Dekorschicht 11, wobei die beiden Dekorschichten 10, 11 aus den selben oder aus unterschiedlichen Materialien bestehen können. Wie strichliert in Fig. 2 angedeutet, kann zwischen der Dekorschicht 3 und der Kernschicht 5 und/oder zwischen der weiteren Dekorschicht 11 und der Kernschicht 5 zumindest eine weitere Schicht 12 angeordnet sein. Es soll damit verdeutlicht werden, dass der Schichtaufbau des Grundkörpers 5, insbesondere die Anzahl der Schicht, nicht auf die beschriebenen und gezeigten Ausführungsvarianten beschränkt ist.

In einer ersten Ausführungsvariante - in Fig. 2 sind mehrere Ausführungsvarianten dargestellt - weist das Abdeckelement 9 zumindest teilweise mit einer Höhe 13 auf, die größer ist als eine Schichtdicke 14 des Grundkörpers 2 in gleicher Richtung betrachtet. Dadurch wird ermöglicht, dass das Abdeckelement 9 den Grundkörper 2 im Bereich der Seitenkanten 7 umgreift, sodass das Abdeckelement 9 mit daran ausgebildeten Schenkeln 15, 16 auf der Oberseite 4 und der Unterseite 10 des Grundkörpers anliegt. Es wird damit eine Formschluss zwischen dem Abdeckelement 9 und dem Grundkörper 2 ausgebildet.

Prinzipiell ist es auch möglich, dass das Abdeckelement 9 den Grundkörper 2 nur an der Oberseite 4 oder nur an der Unterseite 10 überdeckend angeordnet ist, sodass nur einer der Schenkel 15, 16 am Abdeckelement ausgebildet ist.

Das Abdeckelement 9 dieser Ausführungsvariante weist einen im Wesentlichen symmetrischen Querschnitt auf, wobei ein vom Grundkörper 2 weg weisender vorderer Bereich 17 des Abdeckelementes gerundet ausgeführt ist.

Es besteht aber auch die Möglichkeit, wie dies in Fig. 2 strichliert angedeutet ist, dass das Abdeckelement 9 im vorderen Bereich 17 zumindest annähernd spitz zulaufend ausgebildet ist, wobei der vorderste Bereich bevorzugt ebenfalls gerundet ausgeführt ist.

Darüber hinaus besteht die Möglichkeit, dass in dem Abdeckelement 9 zumindest ein Verstärkungselement 18 angeordnet bzw. eingebettet ist, wie dies in Fig. 2 mit strichlierten Kreisen dargestellt ist. Die Lage und die Form dieser Verstärkungselemente 18 richtet sich dabei nach den mechanischen Anforderungen an das Kfz-Innenausstattungsbauteil 1.

In Fig. 3 ist eine weitere Ausführungsvariante des Kfz-Innenausstattungsbauteils 1 gezeigt, bei der die Beschnittkante 8 zumindest teilweise eine Querschnittsverjüngung aufweist, sodass sich der Grundkörper 2 in Richtung auf die Seitenkante 7 verjüngt. Es sei jedoch angemerkt, dass die dargestellte Form der Querschnittsverjüngung des Grundkörpers 2 nicht beschränkend ist. Insbesondere muss diese Querschnittsverjüngung nicht scharfkantig als Absetzung 19 ausgebildet sein, sondern kann auch mit einer Rundung versehen sein. Weiter besteht die Möglichkeit, dass der Grundkörper 2 im Bereich der Beschnittkante 8 abgeschrägt ist.

Die Absetzung 19 kann bevorzugt an beiden einander gegenüberliegenden Oberflächen des Grundkörpers 2, also an der Oberseite 4 und auch an der dieser Oberseite 4 gegenüberliegenden Unterseite ausgebildet sein, wobei auch nur eine dieser Oberflächen mit der Absetzung 19 versehen sein kann. Die Absetzung 19 kann beispielsweise durch die Entfernung der Dekorschicht 3 in diesem Bereich (bzw. durch das Vorsehen einer Dekorschicht 3 mit kleineren Abmessungen) erzeugt werden. Durch die Absetzung 19 besteht die Möglichkeit, dass das Abdeckelement 9 zumindest annähernd ebenflächig mit den beiden Oberflächen des Grundkörpers 2 abschließt.

Weiter besteht die Möglichkeit, wie dies ebenfalls in Fig. 3 gezeigt ist, dass der Grundkörper 2 stirnseitig zumindest teilweise eine Ausnehmung 20, die insbesondere nutartig ausgeführt ist, aufweist, wobei das Abdeckelement 9, das heißt der Kunststoff des Abdeckelementes 9, bis in diese nutförmige Ausnehmung 20 hineinreicht, wodurch die Verbindung zwischen dem Abdeckelement 9 und dem Grundkörper 2 des Kfz-Innenausstattungsbauteils 1 verbessert werden kann. Bevorzugt weist diese insbesondere nutförmige Ausnehmung 20 einen schwalbenschwanzförmigen Querschnitt bzw. zumindest eine Hinterschneidung auf, wodurch der Verankerungs- und Verbindungseffekt zwischen dem Abdeckelement 9 und dem Grundkörper 2 verbessert wird. Es ist jedoch prinzipiell möglich auch andere Querschnittsformen, beispielsweise einen rechteckförmigen oder einen quadratischen Querschnitt, für diese Ausnehmung 20 vorzusehen. Des weiteren muss diese Ausnehmung 20, wenngleich dies die bevorzugte Ausführungsvariante ist, nicht zwingend nutartig sein, sondern können an diskreten Bereichen am Grundkörper 2 stirnseitig im Bereich der Beschnittkante 8 mehrere Vertiefungen bzw. Ausnehmungen 20 angeordnet werden. Es ist weiter möglich, zumindest zwei nutförmige Ausnehmungen 20 stirnseitig anzuordnen.

In einer Ausführungsvariante dazu besteht die Möglichkeit, dass derartige, insbesondere nutförmige, Ausnehmungen 20 nicht nur stirnseitig im Bereich des Abdeckelementes 9 angeordnet sind, sondern dass auch an zumindest einer der Oberflächen, das heißt beispielsweise der Oberseite 4 oder der Unterseite, des Grundkörpers 2 zumindest eine derartige Ausnehmung 20 aus demselben Zweck im Bereich der Beschnittkante 8, das heißt des Abdeckelementes 9, vorgesehen wird.

Strichliert ist in Fig. 3 angedeutet, dass in dem Abdeckelement 9 auch zumindest ein Hohlraum 21 vorhanden sein kann, der sich insbesondere über die gesamte Länge des Abdeckelementes 9 in Umfangsrichtung des Kfz-Innenausstattungsbauteils 1 durchgehend erstrecken kann. Durch diesen zumindest einen Hohlraum 21 kann dem Abdeckelement 9 eine verringerte Steifigkeit verliehen werden, wodurch es beispielsweise Konturen, an denen es zur Anlage gelangt, besser nachformen kann, selbst wenn das Abdeckelement 9 an sich aus einem härteren Kunststoff hergestellt oder eine abdämpfende Wirkung erzeugt wird.

In Fig. 4 ist der Vollständigkeit halber eine einfache Ausführungsvariante des Kfz-Innenausstattungsbauteils 1 dargestellt. Dessen Grundkörper 2 besteht nur aus der Kernschicht 5 und einer Dekorschicht 3. Das Abdeckelement 9 ist als einfache Leiste, beispielsweise mit rechteckförmigem Querschnitt ausgeführt.

Es ist weiter möglich, wie dies an sich für Hutablagen bekannt ist, dass an dem Kfz-Innenausstattungsbauteil 1 zumindest ein Befestigungselement 22 angeordnet ist, um die Hutablage an einer Heckklappe eines Kraftfahrzeuges befestigen zu können. Derartige Befestigungselemente 22 sind aus dem Stand der Technik bekannt und bestehen beispielsweise aus einer Haltevorrichtung 23, einem damit verbundenen, insbesondere schnurförmigen, Element 24 sowie einem mit der Heckklappe verbindbaren, insbesondere einhängbaren Ringelement 25 (Fig. 1). Dieses Befestigungselement 22 bzw. die Haltevorrichtung 23 bzw. die Befestigungselemente 22 bzw. Haltevorrichtungen 23 können nachträglich an dem Kfz-Innenausstattungsbauteil 1 angeordnet werden, insbesondere stirnseitig, oder sie werden bereits vor der Ausbildung des Abdeckelementes 9 am Grundkörper 2 des Kfz-Innausstattungsbauteils 1 angebracht, sodass der Kunststoff für die Herstellung der Abdeckelementes 9 dieses Befestigungselement 22 bzw. diese Haltevorrichtung 23 zumindest teilweise einschließt und damit teilweise in dem Abdeckelement 9 verankert wird. Dazu kann das Befestigungselement 22 bzw. die Haltevorrichtung 23 auch entsprechende Vorkehrungen, wie beispielsweise hakenförmige Elemente oder dergleichen aufweisen, die gegebenenfalls profiliert und/oder mit Durchbrüchen versehen sind, sodass eine bessere Verankerung des Befestigungselementes 22 bzw. der Haltevorrichtung 23 in dem Abdeckelement 9 erreicht werden kann.

Es besteht im Rahmen der Erfindung die Möglichkeit, dass der Grundkörper 2 mehrere Beschnittkanten 8 aufweist, z.B. wenn der Grundkörper 2 aus einem größeren Formteil geschnitten, gestanzt, etc., wird, wobei zumindest zwei derartige Beschnittkanten 8 aneinander grenzen. In diesem Fall ist es von Vorteil, wenn der Übergang zwischen zwei Beschnittkanten 8 mit einer Rundung versehen ist.

Es sei darauf hingewiesen, dass die voranstehend beschriebenen Ausführungsvarianten des Kfz-Innenausstattungsbauteils 1 hinsichtlich der Form und des Schichtaufbaus nicht beschränkend zu sehen sind, sondern lediglich erläuternden Charakter haben, wenngleich diese Ausführungsvarianten bevorzugte Ausführungsvarianten des Kfz-Innenausstattungsbauteils 1 sind.

Weiter ist der Begriff "Beschnittkante" breit zu sehen. Es ist nicht zwingend notwendig, dass der Beschnitt des Grundkörpers 2 des Kfz-Innenausstattungsbauteils 1 im Zuge des Verfahrens nach der Erfindung durchgeführt wird. Es können auch bereits entsprechend konfektionierte Werkstoffe zum Aufbau des Grundkörpers 2 des Kfz-Innenausstattungsbauteils 1 eingesetzt werden. Zudem muss der Beschnitt des Grundkörpers nicht zwingend durch Stanzen erfolgen, vielmehr können auch andere Schneidwerkzeuge verwendet werden. Darüber hinaus ist ein Beschnitt nicht zwingend notwendig, falls die einzelnen Schichten des Grundkörpers 2 des Kfz-Innenausstattungsbauteils 1 bereits in der richtigen Größe hergestellt werden.

Das Abdeckelement 9 für die zumindest teilweise, insbesondere gesamte, Randeinfassung des Grundkörpers 2 des Kfz-Innenausstattungsbauteils 1 wird mit einem 3D-Druckverfahren aus einem polymeren Kunststoff hergestellt, d.h. aufgedruckt. Der polymerer Kunststoff kann ein Thermoplast, ein Duroplast oder ein Elastomer oder eine Mischung aus zumindest zwei dieser Kunststoffe sein. Beispielsweise kann als Kunststoff PP, PET, ABS-PC, ABS, PLA, TPE, PUR, etc. verwendet werden. Vorzugsweise wird ein thermoplastischer Kunststoff eingesetzt, insbesondere ABS oder PP. Es ist aber auch möglich, dass das Abdeckelement 9 aus mehr als einem Kunststoff hergestellt wird, indem beispielsweise verschiedene polymere Kunststoffe schichtweise aufgedruckt werden oder indem ein polymerer Kunststoff von einem weiteren polymeren Kunststoff zumindest teilweise abgedeckt wird, um beispielsweise eine bestimmte Oberflächenbeschaffenheit des Abdeckelementes 9 zu erreichen, oder indem das voranstehend beschriebene zumindest eine Verstärkungselement 18 ebenfalls aus einem polymeren Kunststoff hergestellt wird, der unterschiedlich ist, zum polymeren Kunststoff des restlichen Abdeckelementes 9, insbesondere härter bzw. steifer. Das 3D-Druckverfahren hat hierbei den Vorteil, dass die unterschiedlichen polymeren Kunststoffe in einem Arbeitsschritt aufgedruckt werden können.

Falls das zumindest eine Verstärkungselement 18 vorgesehen und mittels des 3D-Druckverfahrens hergestellt wird, kann als polymerer Werkstoff hierfür ein Kunststoff verwendet werden, der ausgewählt ist aus einer Gruppe umfassend oder bestehend aus PET, PA, PUR, Epoxyharz, ABS. Andere geeignete Kunststoffe sind ebenfalls verwendbar. Es ist aber auch möglich, dass das Verstärkungselement 18 aus Fasern, wie z.B. Glasfasern, Kohlenstofffasern, Basaltfasern, etc., gebildet werden kann.

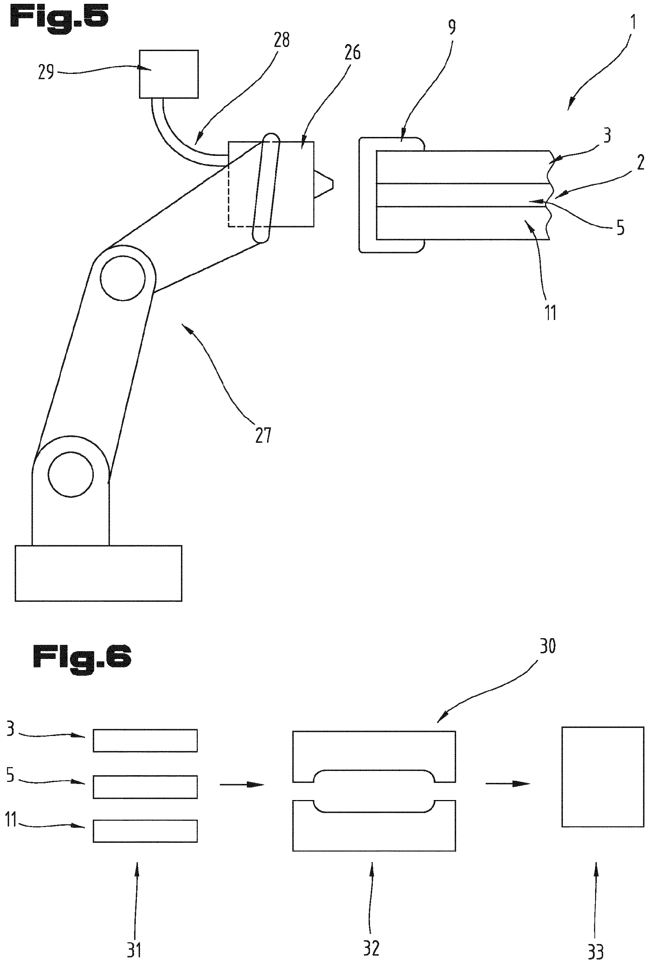

Wie in Fig. 5 schematisch dargestellt, wird nach dem 3D-Druckverfahren auf den Grundkörper 2 des Kfz-Innenausstattungsbauteils 1, der wie voranstehend beschrieben die Kernschicht 5, die Dekorschicht 3 und die Dekorschicht 11 aufweisen kann bzw. aus diesen Schichten bestehen kann, mittels eines Druckkopfes 26 das Abdeckelement 9 aus dem zumindest einen, gegebenenfalls geschmolzenen, polymeren Kunststoff hergestellt, indem der polymere Kunststoff auf den Grundkörper 2 an den entsprechenden Stellen (siehe voranstehende Beschreibung) aufgedruckt wird. Der Druckkopf 26 kann dazu auf einem Roboter 27 montiert sein. Weiter kann der Druckkopf 26 mehrdimensional beweglich ausgeführt sein bzw. angeordnet sein. Alternativ oder zusätzlich dazu ist es auch möglich das der Grundkörper 2 mit eine entsprechenden Haltevorrichtung, insbesondere mehrdimensional, beweglich gehalten wird.

Der Druckkopf 26 ist derart ausgebildet, dass er den zu druckenden Werkstoff in geringen, schichtförmigen Bahnen austragen kann, wozu der Druckkopf 26 Austragelemente aufweist, die hierfür entsprechend ausgebildet sind. Vorzugsweise kann der Druckkopf 26 geheizt und/oder gekühlt werden. Der Druckkopf 26 kann gegebenenfalls zur Verarbeitung von UVhärtenden Kunststoffen auch zumindest eine UV-Lampe aufweisen.

Der Druckkopf 26 ist über eine Leitung 28 mit zumindest einem Vorratsbehälter 29 verbunden. Im Vorratsbehälter 29 wird das Rohmaterial bzw. das Polymermaterial, aus dem das Abdeckelement 9 hergestellt werden soll, vorrätig gehalten und aus diesem dem Druckkopf 26 zugeführt.

Wie strichliert in Fig. 5 angedeutet ist, wird das Abdeckelement 9 schichtweise aufgebaut. Mittels entsprechender Daten, die der Recheneinheit des 3D-Druckers zur Verfügung gestellt werden, können dabei die gewünschten Konturen des Abdeckelementes 9, also auch die beispielhaft in Fig. 5 dargestellte beidseitige Überdeckung des Grundkörpers 2 durch das Abdeckelement 9, hergestellt werden.

Das Abdeckelement 9 kann, je nach Ausführung des Druckkopfes 26 und/oder des Bewegungsablaufes über seine Länge zur Gänze oder abschnittsweise schichtweise aufgebaut werden.

Als 3D-Druckverfahren wird insbesondere ein Verfahren mit geschmolzenem Material, wie FDM (Fused Deposition Modeling) oder mit UV-härtbarem Material, wie z.B. MJM (Multi-Jet-Modeling) angewandt. Es können aber auch andere 3D-Druckverfahren eingesetzt werden.

Wie aus Fig. 6 ersichtlich ist, kann das 3D-Druckverfahren Teil einer Produktionslinie 30 zur (Serien-)Herstellung des Kfz-Innenausstattungsbauteils 1 sein. Die Produktionslinie 30 kann in Produktionsrichtung eine erste Station 31, eine Formgebungsstation 32 und eine Druckstation 33 umfassen bzw. aus diesen bestehen. In der ersten Station 31 können die einzelnen Schichten für die Herstellung des Grundkörpers 2, also beispielsweise die Kernschicht 5 und die Dekorschichten 3, 11 bzw. weitere Schichten entsprechenden dem gewünschten Schichtaufbau aufeinander gelegt und gegebenenfalls aufgeheizt werden. In der folgenden Formgebungsstation 32 kann diesem vorerst ebenen Schichtaufbau die gewünschte Form in einer Presse verliehen werden und die einzelnen Schichten miteinander verbunden werden. Es ist gegebenenfalls möglich, dass die Station 31 und die Formgebungsstation 32 zusammengefasst werden, sodass die Schichtmaterialien direkt in der Formgebungsstation aufeinander gelegt, verformbar und in Form gebracht sowie miteinander verbunden werden. Der Beschnitt des Kfz-Innenausstattungsbauteils 1 kann in der Formgebungsstation 32 oder in einer nachgeschalteten Station, vor dem Aufbringen des Abdeckelementes 9 erfolgen. Die Stationen 31 und/oder 32 können dem Stand der Technik entsprechend ausgebildet bzw. eingesetzt werden. Sie können mit zumindest einem Beschnittelement für das Kfz-Innenausstattungsbauteil 1 ausgerüstet sein. Ein gegebenenfalls notwendiger Beschnitt kann aber auch in einem gesonderten Werkzeug erfolgen.

Nach der Formgebungsstation 32 folgt die Druckstation 33, in der das Abdeckelement 9 mit dem Druckkopf 26 (Fig. 5) hergestellt wird. Diese Druckstation 33 kann dabei eine Bearbeitungskammer bzw. Bearbeitungskabine aufweisen, in der der Druckkopf 26 und gegebenenfalls der Roboter 27 angeordnet ist bzw. sind. Die Bearbeitungskammer bzw. Bearbeitungskabine kann geschlossen ausgeführt sein. Die Druckstation 33 kann direkt im Anschluss an die Formgebungsstation 32 angeordnet sein. Es ist aber auch möglich, dass der Druck nach einer Zwischenlagerung des Abdeckelementes 9 im Zuge der Montage weiterer Anbauteile erfolgt.

Nach einer Ausführungsvariante dieses Verfahrens zur Herstellung des Abdeckelementes 9 kann vorgesehen sein, dass der Grundkörper 2 des Kfz-Innenausstattungsbauteils 1 zumindest im Bereich der mit dem Abdeckelement 9 zu versehenden Seitenkante(n) 7 vor der Herstellung des Abdeckelementes 9 erwärmt wird. Insbesondere kann der Grundkörper 2 (in Abhängigkeit seines Werkstoffes) auf eine Temperatur erwärmt werden, die ausgewählt ist aus einem Bereich von 50 °C bis 200 °C bzw. ausgewählt ist aus einem Bereich von 30 % bis 80 % der Schmelztemperatur des Kunststoffes aus dem das Abdeckelement 9 hergestellt wird. Bei mehreren verwendeten Kunststoffen ist dies die Temperatur des bei der niedrigsten Temperatur schmelzenden Kunststoffes.

Die Temperierung des Grundkörpers 2 kann beispielsweise mittels Infrarotstrahler, Heißluft, heißer Stempel, etc., erfolgen.

Es kann weiter vorgesehen werden, dass am Beginn das Herstellen des Abdeckelementes 9 auf den Grundkörper 2 mit einer ersten Temperatur und am Ende mit einer zweiten Temperatur erfolgt, wobei die erste Temperatur meist höher ist als die zweite Temperatur.

Gemäß einer Ausführungsvariante dazu kann vorgesehen werden, dass das Herstellen des Abdeckelementes 9 auf den Grundkörper 2 unter Anwendung eines Temperaturgradienten zwischen der ersten Temperatur und der zweiten Temperatur erfolgt. Der Temperaturgradient kann ausgewählt sein aus einem Bereich von 1°C/Schichtauftrag bis 10 °C/ Schichtauftrag.

Es kann weiter vorgesehen werden, dass das Abdeckelement 9 mit einem Härtegradienten hergestellt wird. Der Härtegradient kann beispielsweise durch entsprechende Daten und/oder Materialwahl gesteuert werden, wobei aufgrund der Daten und/oder Materialwahl die Rohstoffzusammensetzung zur Herstellung des Abdeckelementes 9 geändert wird. Die 3D-Druckeinrichtung kann dazu mehr als einen Vorratsbehälter 29 aufweisen, in denen unterschiedliche polymere Kunststoffe bzw. Rohmaterialien hierfür enthalten sind.

Die Ausführungsbeispiele zeigen mögliche Ausführungsvarianten des Kfz-Innenausstattungsbauteils 1, der 3D-Druckeinrichtung und der Produktionslinie 30.

Der Ordnung halber sei abschließend darauf hingewiesen, dass zum besseren Verständnis des Aufbaus des Kfz-Innenausstattungsbauteils 1, der 3D-Druckeinrichtung und der Produktionslinie 30 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Kfz-Innenausstattungsbauteil | 31 | Station |
| 2 | Grundkörper | 32 | Formgebungsstation |
| 3 | Dekorschicht | 33 | Druckstation |
| 4 | Oberseite | | |
| 5 | Kernschicht | | |
| 6 | Vertiefung | | |
| 7 | Seitenkante | | |
| 8 | Beschnittkante | | |
| 9 | Abdeckelement | | |
| 10 | Unterseite | | |
| 11 | Dekorschicht | | |
| 12 | Schicht | | |
| 13 | Höhe | | |
| 14 | Schichtdicke | | |
| 15 | Schenkel | | |
| 16 | Schenkel | | |
| 17 | Bereich | | |
| 18 | Verstärkungselement | | |
| 19 | Absetzung | | |
| 20 | Ausnehmung | | |
| 21 | Hohlraum | | |
| 22 | Befestigungselement | | |
| 23 | Haltevorrichtung | | |
| 24 | Element | | |
| 25 | Ringelement | | |
| 26 | Druckkopf | | |
| 27 | Roboter | | |
| 28 | Leitung | | |
| 29 | Vorratsbehälter | | |
| 30 | Produktionslinie | | |

## Patentansprüche

1. Verfahren zur Herstellung eines Kfz-Innenausstattungsbauteils (1) aus einem Grundkörper (2), der vollständig oder zumindest teilweise aus einem polymeren Werkstoff hergestellt wird, und der von Seitenkanten (7) entlang seines Umfangs begrenzt ist, wobei zumindest eine Seitenkanten (7) zumindest teilweise, bevorzugt sämtliche Seitenkanten (7) entlang des gesamten Umfangs des Grundkörpers (2), mit einem Abdeckelement (9) auf Kunststoffbasis versehen werden, **dadurch gekennzeichnet, dass** das Abdeckelement (9) mittels eines 3D-Druckverfahrens auf dem Grundkörper gedruckt wird.

2. Verfahren nach Anspruch 1, **dadurch gekennzeichnet, dass** das Abdeckelement (9) als Randleiste ausgebildet wird.

3. Verfahren nach Anspruch 1 oder 2, **dadurch gekennzeichnet, dass** das Abdeckelement (9) den Grundkörper (2) beidseits umgreifend hergestellt wird.

4. Verfahren nach einem der Ansprüche 1 bis 3, **dadurch gekennzeichnet, dass** der Grundkörper (2) zumindest im Bereich der mit dem Abdeckelement (9) zu versehenden Seitenkante(n) (7) vor dem Herstellen des Abdeckelementes (9) erwärmt wird.

5. Verfahren nach einem der Ansprüche 1 bis 4, **dadurch gekennzeichnet, dass** am Beginn das Herstellen des Abdeckelementes (9) auf den Grundkörper (2) mit einer ersten Temperatur und am Ende mit einer zweiten Temperatur erfolgt, wobei die erste Temperatur höher ist als die zweite Temperatur.

6. Verfahren nach Anspruch 5, **dadurch gekennzeichnet, dass** das Herstellen des Abdeckelementes (9) auf den Grundkörper (2) unter Anwendung eines Temperaturgradienten zwischen der ersten Temperatur und der zweiten Temperatur erfolgt.

7. Verfahren nach einem der Ansprüche 1 bis 6, **dadurch gekennzeichnet, dass** in zumindest einer, die Seitenkante (7) bildende Stirnfläche eine hinterschnittene Nut ausgebildet wird.

8. Verfahren nach einem der Ansprüche 1 bis 7, **dadurch gekennzeichnet, dass** aus einem zweiten Werkstoff in dem Abdeckelement (9) zumindest ein Verstärkungselement (18) mittels 3D-Druck ausgebildet wird.

9. Verfahren nach einem der Ansprüche 1 bis 8, **dadurch gekennzeichnet, dass** das Abdeckelement (9) mit einem Härtegradienten hergestellt wird.

10. Kfz-Innenausstattungsbauteil (1) mit einem Grundkörper (2), der zumindest teilweise aus einem polymeren Werkstoff besteht, und der von Seitenkanten (7) entlang seines Umfangs begrenzt ist, wobei an zumindest einer Seitenkanten (7) zumindest teilweise, bevorzugt an sämtlichen Seitenkanten (7) entlang des gesamten Umfangs des Grundkörpers (2), ein Abdeckelement (9) auf Kunststoffbasis angeordnet ist, **dadurch gekennzeichnet, dass** das Abdeckelement (9) mittels 3D-Druck auf dem Grundkörper hergestellt ist.

11. Verwendung eines 3D-Druckers zum Aufdrucken eines Abdeckelementes (9) auf Kunststoffbasis entlang von zumindest einer Seitenkante (7) eines, zumindest teilweise aus einem polymeren Werkstoff hergestellten Grundkörpers (2) eines Kfz-Innenausstattungsbauteils (1).

## Claims

1. A method for producing a motor vehicle interior trim component (1) from a base body (2), which is entirely or at least partly produced from a polymeric material, and which is limited along its circumference by side edges (7), wherein at least one side edge (7) at least partially, preferably all side edges (7) along the entire circumference of the base body (2), are provided with a cover element (9) on a plastic basis, **characterized in that** the cover element (9) is printed on the base body by means of a 3D printing method.

2. The method according to claim 1, **characterized in that** the cover element (9) is formed as an edge strip.

3. The method according to claim 1 or 2, **characterized in that** the cover element (9) is produced so as to embrace the base body (2) on both sides.

4. The method according to one of claims 1 to 3, **characterized in that** the base body (2) is heated at least in the region of the side edge(s) (7) to be provided with the cover element (9) before the cover element (9) is produced.

5. The method according to one of claims 1 to 4, **characterized in that** at the beginning, the production of the cover element (9) on the base body (2) is carried out at a first temperature and at the end at a second temperature, wherein the first temperature is higher than the second temperature.

6. The method according to claim 5, **characterized in that** producing the cover element (9) on the base body (2) is carried out under the application of a temperature gradient between the first temperature and the second temperature.

7. The method according to one of claims 1 to 6, **characterized in that** an undercut groove is formed in at least one end face forming the side edge (7).

8. The method according to one of claims 1 to 7, **characterized in that** at least one enforcement element (18) is formed in the cover element (9) from a second material by means of 3D printing.

9. The method according to one of claims 1 to 8, **characterized in that** the cover element (9) is produced with a hardness gradient.

10. A motor vehicle interior trim component (1) having a base body (2), which at least partly consists of a polymeric material, and which is limited along its circumference by side edges (7), wherein on at least one side edge (7) at least partially, preferably on all side edges (7) along the entire circumference of the base body (2), a cover element (9) on a plastic basis is arranged, **characterized in that** the cover element (9) is produced on the base body by means of a 3D printing.

11. A use of a 3D printer for printing a cover element (9) on a plastic basis along at least one side edge (7) of a base body (2), which is at least partly produced from a polymeric material, of a motor vehicle interior trim component (1).

## Revendications

1. Procédé de fabrication d'un composant d'équipement interne d'un véhicule automobile (1) à partir d'un corps de base (2), qui est constitué entièrement ou au moins partiellement d'un matériau polymère et qui est limité par des arêtes latérales (7) le long de sa périphérie, au moins une arête latérale (7), de préférence toutes les arêtes latérales (7) le long de toute la périphérie du corps de base (2), étant munies au moins partiellement d'un élément de recouvrement (9) à base de matière plastique, **caractérisé en ce que** l'élément de recouvrement (9) est imprimé sur le corps de base à l'aide d'un procédé d'impression 3D.

2. Procédé selon la revendication 1, **caractérisé en ce que** l'élément de recouvrement (9) est conçu comme un rebord.

3. Procédé selon la revendication 1 ou 2, **caractérisé en ce que** l'élément de recouvrement (9) est réalisé de façon à entourer le corps de base (2) des deux côtés.

4. Procédé selon l'une des revendications 1 à 3, **caractérisé en ce que** le corps de base (2) est chauffé, avant la réalisation de l'élément de recouvrement (9), au niveau des arêtes latérales (7) qui doivent être munies de l'élément de recouvrement (9).

5. Procédé selon l'une des revendications 1 à 4, **caractérisé en ce que**, au début, la fabrication de l'élément de recouvrement (9) sur le corps de base (2) a lieu avec une première température et à la fin avec une deuxième température, la première température étant supérieure à la deuxième température.

6. Procédé selon la revendication 5, **caractérisé en ce que** la fabrication de l'élément de recouvrement (9) sur le corps de base (2) a lieu en appliquant un gradient de température entre la première température et la deuxième température.

7. Procédé selon l'une des revendications 1 à 6, **caractérisé en ce que**, dans au moins une face frontale formant l'arête latérale (7), est réalisée une rainure en contre-dépouille.

8. Procédé selon l'une des revendications 1 à 7, **caractérisé en ce que**, dans l'élément de recouvrement (9), est réalisé au moins un élément de renforcement (18) par impression 3D à partir d'un deuxième matériau.

9. Procédé selon l'une des revendications 1 à 8, **caractérisé en ce que** l'élément de recouvrement (9) est fabriqué avec un gradient de dureté.

10. Composant d'équipement interne d'un véhicule automobile (1) avec un corps de base (2), qui est constitué au moins partiellement d'un matériau polymère et qui est limité par des arêtes latérales (7) le long de sa périphérie, moyennant quoi, au niveau d'au moins une arête latérale (7), de préférence au niveau de toutes les arêtes latérales (7) le long de toute la périphérie du corps de base (2), est disposé un élément de recouvrement (9) à base de matière plastique, **caractérisé en ce que** l'élément de recouvrement (9) est imprimé sur le corps de base à l'aide d'un procédé d'impression 3D.

11. Utilisation d'une imprimante 3D pour l'impression d'un élément de recouvrement (9) à base de matière plastique le long d'au moins une arête latérale (7) d'un corps de base (2) d'un composant d'équipement interne d'un véhicule automobile (1), constitué au moins partiellement d'un matériau polymère.
